Europäisches Patentamt

(19) European Patent Office

Office européen des brevets

(11) Veröffentlichungsnummer: **0 017 070 B1**

(12) **EUROPÄISCHE PATENTSCHRIFT**

(45) Veröffentlichungstag der Patentschrift: **20.01.82**

(51) Int. Cl.³: **H 01 H 33/56, F 16 J 15/18**

(21) Anmeldenummer: **80101399.6**

(22) Anmeldetag: **18.03.80**

(54) **Gasdichte Durchführung für Schubstangen von mit Druckgas arbeitenden elektrischen Schaltgeräten.**

(30) Priorität: **24.03.79 DE 2911688**

(43) Veröffentlichungstag der Anmeldung:
**15.10.80 Patentblatt 80/21**

(45) Bekanntmachung des Hinweises auf die Patenterteilung:
**20.01.82 Patentblatt 82/3**

(84) Benannte Vertragsstaaten:
**CH FR IT SE**

(56) Entgegenhaltungen:
**DE-A-2 737 726**
**GB-A-888 250**
**GB-A-1 486 708**
**FR-A-2 223 813**
**FR-A-2 285 543**
**US-A-3 147 981**

(73) Patentinhaber: **Licentia Patent-Verwaltungs-GmbH, Theodor-Stern-Kai 1, D-6000 Frankfurt/Main 70 (DE)**

(72) Erfinder: **Kriechbaum, Karl, Dr.-Ing., Am Hange 1, D-3500 Kassel (DE)**

(74) Vertreter: **Lertes, Kurt, Dr., Licentia Patent-Verwaltungs-GmbH Theodor-Stern-Kai 1, D-6000 Frankfurt 70 (DE)**

ACTORUM AG.

Gasdichte Durchführung für Schubstangen von mit Druckgas arbeitenden elektrischen Schaltgeräten

Es ist bekannt, dass an die Dichtungen von Schubstangen, die die Wände von gasgefüllten Schaltgeräten durchdringen, besonders hohe Anforderungen gestellt werden müssen. Die zulässigen Leckraten liegen im Bereich von $< 1\%$ pro Jahr. Andererseits sind die Revisionsintervalle der Schaltgeräte auf 10 Jahre ausgedehnt worden. Bei mit dem Gas $SF_6$ gefüllten Schaltgeräten kommt hinzu, dass das Öffnen von Gasräumen wegen der Spaltprodukte des $SF_6$ mit besonderen Aufwendungen verbunden ist.

Es sind eine Reihe von Vorschlägen zur Ausbildung einer gasdichten Durchführung bekannt. So zeigt z. B. die DE-PS 23 15 732 eine gasdichte Durchführung einer relativ zur Wandung eines Gasbehälters beweglichen Schubstange für mit Druckgas arbeitende elektrische Schaltgeräte, die mindestens zwei, beabstandet hintereinander angeordnete, separat entfernbare Dichtungsbereiche aufweist, wobei jeder Dichtungsbereich mindestens je einen Dichtungsring aufweist, und wobei ein Dichtungsbereich von ausserhalb des Gasraumes zugänglich ist.

In diesem bekannten Fall sind die Dichtringe in Ringkörpern vorgesehen, die an beiden Seiten der Durchführung innerhalb der durchzuführenden Wand entfernbar angeordnet sind.

Durch eine Entfernung des von ausserhalb des Gasraumes zugänglichen Dichtkörpers kann diese Dichtung, ohne dass ein Öffnen des Gasraumes notwendig ist, ausgewechselt werden.

Um bei dieser bekannten Dichtung den von aussen zugänglichen Dichtring auszuwechseln, ist somit das Entfernen des Ringkörpers notwendig, in dem der Dichtring gehaltert wird, aber zusätzlich ist auch z. B. durch Lösen der Kupplung zwischen dem Antrieb und der Schubstange, die Schubstange aufzutrennen, damit der neue Ring auf die Schubstange aufgebracht werden kann. Dieses Auswechseln eines Dichtringes ist jedoch sehr zeitaufwendig, und vor allem stellt diese Auswechslung einen grösseren Eingriff dar, so dass beispielsweise dann, wenn es sich um einen Schalter handelt, eine Freischaltung notwendig ist.

Der Erfindung liegt die Aufgabe zugrunde, die gasdichte Durchführung, ausgehend von der vorgenannten DE-PS 23 15 732 so zu gestalten, dass ein Auswechseln eines Dichtringes sehr einfach durchgeführt werden kann.

Die Lösung dieser Aufgabe gelingt gemäss der Erfindung dadurch, dass dieser von aussen zugängliche Dichtungsbereich einen zweigeteilten Klemmring aufweist, mittels dem der zugeordnete Dichtring des von aussen zugängigen Bereiches dicht andrückbar ist, und dass auf der Schubstange ausserhalb des Gasraumes mindestens ein Ersatzdichtungsring aufgefädelt ist. Bei der erfindungsgemässen gasdichten Durchführung ist ein Auswechseln eines eventuell auszuwechselnden Dichtungsringes sehr leicht möglich. Es ist zu diesem Zweck lediglich der zweigeteilte Klemmring abzumontieren und der defekte Dichtungsring durch Aufschneiden dieses Ringes zu entfernen. Dabei muss die Schubstange nicht aufgetrennt werden. Der neue Ring, der bereits auf der Schubstange aufgefädelt ist, wird durch einfaches Verschieben dieses Ringes in die Position des alten Dichtungsringes gebracht, worauf der Klemmring wieder eingelegt wird, und um den Dichtungsring anzupressen, in entsprechender Weise angezogen wird. Mittels dieser gasdichten Durchführung ist daher das Auswechseln eines Dichtungsringes sehr einfach und sehr schnell auszuführen; das Auswechseln kann sogar während des Betriebes durchgeführt werden, so dass eine Unterbrechung des Betriebes nicht notwendig ist.

Die auf der Schubstange aufgefädelten Ersatzringe werden zweckmässig durch einen Sonnen- und Schmutzschutz vor einer zu schnellen Alterung bewahrt.

Anhand eines in der Zeichnung dargestellten Ausführungsbeispieles wird die Erfindung näher erläutert. Als Anwendungsbeispiel ist ein $SF_6$-Druckgas-Leistungsschalter gewählt, wobei zu erwähnen ist, dass die Erfindung nicht darauf beschränkt ist, sondern immer dann angewendet werden kann, wenn eine Schubstange gasdicht eine Wandung von mit Druckgas gefüllten Schaltgeräten durchdringt.

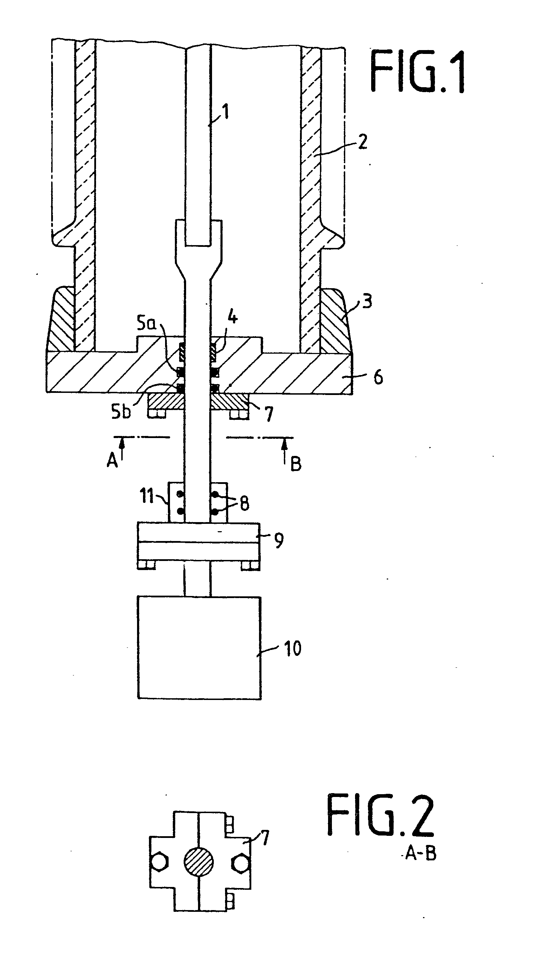

Die Figur 1 der Zeichnung zeigt einen Porzellanstützer 2, der in nicht dargestellter Weise die Schaltpole des Schalters trägt, und an dessen unterem Ende ein Flansch 3 befestigt ist, an dem eine Grundplatte 6 gasdicht befestigt ist. Innerhalb dieses Porzellanstützers befindet sich der mit Druckgas, insbesondere $SF_6$, gefüllte Gasraum, wobei dieser Gasraum an der Grundplatte 6 von einer Antriebsstange 1 des Schalters gasdicht durchdrungen wird. Auf diese gasdichte Durchführung der Antriebsstange 1 bezieht sich im Ausführungsbeispiel die Erfindung. Die Antriebsstange ist über eine Kupplung 9 mit einem Antrieb 10 für den Schalter, z. B. einem hydraulischen oder pneumatischen Antrieb, verbunden. Diese Ausbildungen des Schaltgeräts sind bekannt und brauchen daher nicht näher erläutert zu werden.

Die gasdichte Durchführung innerhalb der Grundplatte 6 weist Gleitringe 4 sowie zwei im Abstand angeordnete Dichtungsringe 5a, 5b auf, die in nicht näher dargestellter Weise mit bekannten Methoden innerhalb der Grundplatte, insbesondere in entsprechenden Fugen untergebracht sind. Von diesen beiden Dichtungsringen ist der Dichtungsring 5b von aussen zugänglich. Ihm ist ein Klemmring 7 zugeordnet, der, wie der Schnitt A-B nach Figur 2 zeigt, zweigeteilt ist und der in bekannter Weise so ausgebildet ist, dass mittels des Klemmringes der Dichtungsring 5b mit dem erforderlichen Anpressdruck in die zugeordnete Fuge gedrückt wird. Auf der Schubstange 1 sind ausserhalb des Gasraumes oberhalb der Kupplung 9 im dargestellten Beispiel zwei Ersatzdichtungsringe 8 aufgefädelt, die durch ein entfernbares Gehäuse 11 von dem Einfluss der Umgebung weitgehend abgeschirmt sind.

Beim Auswechseln des Dichtungsringes 5 b wird zunächst der zweigeteilte Klemmring 7 durch Lösen der entsprechenden Schraubverbindung entfernt. Danach wird der Dichtungsring 5b entfernt und an einer Stelle aufgeschnitten, so dass er von der Schubstange 1, ohne dass diese gelöst werden muss, abgezogen werden kann. Danach wird der obere der Ersatzdichtungsringe 8 an die Position des Dichtungsringes 5b gebracht, der zweigeteilte Klemmring 7 wieder eingelegt und der neue Dichtungsring angezogen.

Wie man erkennt, ist ein Auswechseln des von aussen zugänglichen Dichtungsringes 5b sehr einfach und sehr schnell auszuführen, wobei diese Auswechslung sogar während des Betriebes des Schalters durchgeführt werden kann.

Die Dichtungsringe sind in bekannter Weise sogenannte O-Ringe aus elastischem Material.

**Patentansprüche**

1. Gasdichte Durchführung für Schubstangen (1) von mit Druckgas arbeitenden elektrischen Schaltgeräten, wobei die Schubstange (1) relativ zur Wandung eines Gasbehälters beweglich ist, mit mindestens zwei, beabstandet hintereinander angeordneten, separat entfernbaren Dichtungsbereichen, die jeweils mindestens einen Dichtungsring (5a, 5b) aufweisen, wobei ein Dichtungsbereich von ausserhalb des Gasraumes zugänglich ist, dadurch gekennzeichnet, dass dieser von aussen zugängliche Dichtungsbereich einen zweigeteilten Klemmring (7) aufweist, mittels dem der zugeordnete Dichtring (5b) des von aussen zugängigen Bereiches dicht andrückbar ist, und dass auf der Schubstange (1) ausserhalb des Gasraumes mindestens ein Ersatzdichtungsring (8) aufgefädelt ist.

2. Gasdichte Durchführung nach Anspruch 1, dadurch gekennzeichnet, dass eine Schutzumhüllung (11) für den Ersatzdichtungsring (8) zum Schutz gegen die Witterung (Sonne, Schmutz usw.) vorgesehen ist.

**Claims**

1. A gas-tight wall bushing for connecting rods (1) of electrical switching devices operating with compressed gas, in which the connecting rod (1) is movable relative to the walls of a gas container, with at least two seal areas arranged at a spacing one behind the other and capable of being removed separately, these areas each having at least one sealing ring (5a, 5b), and one seal area being accessible from outside the gas chamber, characterised in that this seal area which is accessible from outside has a two-part clamping ring (7) with the aid of which the associated sealing ring (5b) of the area accessible from outside can be firmly pressed; and that at least one replacement sealing ring (8) is positioned around the connecting rod (1) outside the gas chamber.

2. A gas-tight wall bushing according to claim 1, characterised in that a protective casing (11) for the replacement sealing ring (8) is provided for protection against weathering (sun, dirt, etc.).

**Revendications**

1. Traversée étanche aux gaz pour tiges de poussée (1) d'appareils de commutation électriques fonctionnant dans un milieu gazeux sous pression et dans lesquels la tige de poussée (1) peut coulisser par rapport à la paroi d'un réservoir de gaz et qui comportent au moins deux ensembles d'éléments d'étanchéité disposés à une certaine distance l'un à la suite de l'autre tout en pouvant être retirés séparément et qui comprennent chacun au moins une bague d'étanchéité (5a, 5b), l'un des ensembles d'éléments d'étanchéité pouvant être retiré à partir de l'extérieur de la chambre à gaz, caractérisée en ce que la zone d'étanchéité à laquelle on peut accéder de l'extérieur présente une bague de serrage (7) composée de deux pièces et au moyen de laquelle la bague d'étanchéité (5b) faisant partie de la zone accessible de l'extérieur peut être appliquée de façon étanche et en ce qu'au moins une bague d'étanchéité de réserve (8) est disposée sur la tige de poussée (1) à l'extérieur de la chambre à gaz.

2. Traversée étanche aux gaz suivant la revendication 1, caractérisée en ce que la bague d'étanchéité de réserve (8) est recouverte par une enveloppe (11) la protégeant contre des influences extérieures (soleil, poussières et analogues.

FIG.1

FIG.2

A-B